# EUROPÄISCHE PATENTSCHRIFT

(11) **EP 4 316 750 B1**
(45) Veröffentlichungstag und Bekanntmachung des Hinweises auf die Patenterteilung: **03.09.2025**
(21) Anmeldenummer: 22203851.5
(22) Anmeldetag: 26.10.2022
(51) Int. Cl.: B25F 5/00, B25J 5/00, B25J 11/00, B25J 15/04

(54) **WECHSELSCHNITTSTELLE, BAUROBOTER MIT WECHSELSCHNITTSTELLE UND VERFAHREN ZUM WECHSELN EINES WERKZEUGS**
CHANGING INTERFACE, CONSTRUCTION ROBOT HAVING CHANGING INTERFACE, AND METHOD FOR CHANGING TOOL
INTERFACE INTERCHANGEABLE, ROBOT DE CONSTRUCTION DOTÉ D'UNE INTERFACE INTERCHANGEABLE ET PROCÉDÉ DE CHANGEMENT D'UN OUTIL

(30) Priorität: 03.08.2022 EP 22188419
(43) Veröffentlichungstag der Anmeldung: 07.02.2024
(73) Patentinhaber: Hilti Aktiengesellschaft, 9494 Schaan (LI)
(72) Erfinder: Schmid, Tobias, 86875 Emmenhausen (DE); Hartmann, Markus, 87665 Mauerstetten (DE); Nitzschner, Michael, 86156 Augsburg (DE); Hurka, Florian, 86459 Margertshausen (DE); Fürfanger, Georg, 81373 München (DE); Koscheck, David, 86899 Landsberg (DE); Brugger, Peter, 6800 Feldkirch (AT); Britz, Rory, 82319 Starnberg (DE)
(74) Vertreter: Hilti Aktiengesellschaft Corporate Intellectual Property

(56) Entgegenhaltungen:
- EP-A1- 2 716 418
- EP-A1- 4 016 212

## Beschreibung

Die Erfindung betrifft eine Wechselschnittstelle zur lösbaren Montage eines Werkzeugs an einem Bauroboter und einen Bauroboter wie im Oberbegriff von Anspruch 1 beschrieben und aus EP 2 716 418 A1 bekannt.

Bislang sind Bauroboter bekannt, die zur Ausführung einer bestimmten Art von Bauarbeiten eingerichtet sind. Beispielsweise sind Bohrbauroboter bekannt, die mithilfe einer Gesteinsbohrwerkzeugmaschine Löcher in Decken bohren können.

Wünschenswert wäre ein flexibel einsetzbarer Bauroboter, der unterschiedliche Arten von Bauarbeiten ausführen kann.

Es ist bekannt, Industrieroboter mit einer Wechselschnittstelle auszustatten, sodass solche Industrieroboter mit unterschiedlichen Werkzeugen ausgestattet unterschiedliche industrielle Fertigungsaufgaben ausführen können.

Derartige Wechselschnittstellen sind jedoch nicht oder zumindest nur unter erheblichen Einschränkungen bei Baurobotern verwendbar, da auf Baustellen - anders als bei industriellen Fertigungsaufgaben - stets mit einer erheblichen Belastung durch Staub, Schmutz, Feuchtigkeit oder dergleichen zu rechnen ist. Da moderne Werkzeuge, beispielsweise Steinbohrwerkzeugmaschinen oder Steinmeißelwerkzeugmaschinen, hohe elektrische Leistungen aufnehmen, müssen zur Versorgung der Werkzeuge entsprechende Leistungen sicher vom Bauroboter zum Werkzeug übertragbar sein. Insbesondere darf es nicht zu Fehlfunktionen wie beispielsweise Kurzschlüssen, Funkenschlag oder dergleichen kommen.

Des Weiteren erzeugen Werkzeuge zur Verwendung auf Baustellen, beispielsweise Werkzeuge zur Bearbeitung von Gesteinen wie beispielsweise Beton, erhebliche Vibrationen. Die

Werkzeuge sollten daher stabil, aber, um sie wechseln zu können, dennoch einfach lösbar am Bauroboter montierbar sein.

Aufgabe der vorliegenden Erfindung ist es daher, Mittel und Verfahren anzubieten, um Werkzeuge sicher an einen Bauroboter montieren und insbesondere an einem Bauroboter montierte Werkzeuge wechseln zu können.

Gelöst wird die Aufgabe durch **eine Wechselschnittstelle** zur lösbaren Montage eines Werkzeugs an einem Bauroboter, der zur Ausführung von Bauarbeiten im Hochbau, Tiefbau und / oder Stahlbau eingerichtet ist, wobei die Wechselschnittstelle eine Koppelfläche zur Anordnung und / oder Aufnahme des Werkzeugs aufweist, und wobei die Wechselschnittstelle mehrere Dichtungen aufweist, dadurch gekennzeichnet, dass die Koppelfläche einen Außenrand und einen Innenrand aufweist, so dass zwischen dem Außenrand und dem Innenrand eine Innenfläche eingeschlossen ist, wobei die Koppelfläche wenigstens eine Außendichtung aufweist zur Abdichtung zum Außenrand hin, und wenigstens eine Innendichtung zur Abdichtung zum Innenrand hin aufweist.

Die Dichtungen können die Wechselschnittstelle vor einem Eindringen von Staub, Schmutz, Feuchtigkeit oder dergleichen schützen. Somit kann sichergestellt werden, dass das Werkzeug, insbesondere mechanisch, elektrisch, hydraulisch und / oder pneumatisch, ordnungsgemäß an die Wechselschnittstelle angekoppelt werden kann. Kurzschlüsse oder gar Funkenschlag können vermieden werden. Anschlusspunkte in der Wechselschnittstelle zum werkzeugseitigen Anschluss von Leitungen für Druckluft, Hydraulikflüssigkeit oder dergleichen können sauber bleiben, so dass die Leitungen Fluid-dicht an die Anschlusspunkte angeschlossen werden können.

Die Koppelfläche ermöglicht es zudem, das Werkzeug stabil an der Wechselschnittstelle anzuordnen, sodass sich das Werkzeug selbst bei starken Vibrationen oder dergleichen nicht von der Wechselschnittstelle selbsttätig löst.

Die Wechselschnittstelle kann einen Koppelmechanismus aufweisen. Insbesondere kann die Wechselschnittstelle zum Lösen bzw. Fixieren des Werkzeugs betätigbare Fixierelemente, beispielsweise Fixierstifte, aufweisen. Die Fixierstifte können elektrisch, hydraulisch und / oder pneumatisch betätigbar sein. Die Fixierelemente können eingerichtet sein, in wenigstens eine Ausnehmung des Werkzeugs zu greifen. Insbesondere können sie eingerichtet sein, das Werkzeug mit einen Hintergriff an der Koppelfläche zu halten.

Die Koppelfläche kann einer Kopffläche eines Flanschs, insbesondere eines zum Lösen oder Fixieren betätigbaren Flanschs, entsprechen.

Wenigstens eine der Dichtungen ist dazu eingerichtet, zu einem Außenrand der Koppelfläche hin abzudichten. Vorzugsweise können die Dichtungen aus einem elastischen Material, beispielsweise ein Kautschuk oder ein elastischer Kunststoff, ausgebildet sein. Die Dichtung kann umlaufend sein; beispielsweise kann sie als Dichtungsring geformt sein.

Die Koppelfläche kann ein oder mehrere Anschlusspunkte zum Anschluss von Leitungen aufweisen. Dann können die Dichtungen jeweils ein oder mehrere der Anschlusspunkte umschließen, sodass bei montiertem Werkzeug auch und insbesondere die Anschlusspunkte vor Staub, Schmutz, Feuchtigkeit oder dergleichen geschützt sind.

Die Koppelfläche weist einen Außenrand und einen Innenrand auf, so dass zwischen dem Außenrand und dem Innenrand eine Innenfläche eingeschlossen ist. Beispielsweise kann die Koppelfläche als Ring oder als Rechteck mit einer Innenausnehmung ausgebildet sein. Innerhalb des Innenrandes kann eine Freifläche ausgebildet sein. Durch die Freifläche bzw. einer entsprechend ausgebildeten Durchgangsöffnung kann wenigstens eine Leitung, beispielsweise eine Versorgungsleitung für das Werkzeug durchgeführt sein und / oder durchführbar sein.

Die Wechselschnittstelle weist erfindungsgemäß mehrere Dichtungen auf. Insbesondere weist die Koppelfläche wenigstens eine Dichtung zur Abdichtung zum Außenrand hin und wenigstens eine Dichtung zur Abdichtung zum Innenrand hin auf. Somit können die Innenfläche und gegebenenfalls in der Innenfläche ausgebildete Anschlusspunkte bei montiertem Werkzeug durch die Dichtungen geschützt sein.

Das Werkzeug kann eine zur Koppelfläche komplementär ausgebildete Gegenfläche aufweisen. Die Dichtung kann dann zwischen dem an der Koppelfläche montierten Werkzeug und der Koppelfläche sitzen. Somit kann die Dichtung den durch die Dichtung, die Koppelfläche und die Gegenfläche gebildeten Freiraum abdichten.

Wenigstens eine der Dichtungen kann als Axialdichtung ausgebildet sein. Sie kann dazu insbesondere ausgebildet sein, senkrecht oder im Wesentlichen senkrecht zur Koppelfläche, und damit gegebenenfalls parallel zu einer senkrecht zur Koppelfläche verlaufenden Längsachse der Wechselschnittstelle, zu dichten. Die Dichtung kann dadurch auch bei häufigen Montagen oder Demontagen von Werkzeugen an die beziehungsweise von der Wechselschnittstelle einem geringeren Verschleiß unterliegen.

Weist die Wechselschnittstelle einen Fluidanschluss auf, der zur Innenfläche führt, kann ein Fluid, beispielsweise Druckluft, bei montiertem Werkzeug in den Freiraum eingeströmt werden und damit ein Überdruck im Freiraum aufgebaut werden. Alternativ oder ergänzend ist auch denkbar, dass ein Überdruck dadurch aufgebaut wird, dass bei der Montage des Werkzeugs die wenigstens eine Dichtung ein Stück weit zusammengepresst wird, sodass der Freiraum während des Annäherns der Gegenfläche an die Koppelfläche verkleinert wird, sodass die im Freiraum befindliche Luft komprimiert wird.

Unter einem "Werkzeug" kann ein nicht zu dem Körper des Bauroboter gehörendes Objekt verstanden werden, mit dessen Hilfe die Funktionen des Bauroboters erweitert werden, um auf diese Weise eine Bauaufgabe, beispielsweise eine Bohraufgabe, eine Trennaufgabe, eine Schleifaufgabe oder dergleichen, ausführen zu können. So kann auch unter einem Werkzeug eine elektrische Werkzeugmaschine wie beispielsweise eine Maschine zum Bohren, beispielsweise Bohrhämmer, zum Trennen, beispielsweise eine Säge oder ein Winkelschleifer, zum Schleifen, zum Markieren, zum Messen oder dergleichen verstanden werden.

Beispielsweise kann es sich um eine Steinbohrwerkzeugmaschine, eine Steinmeißelwerkzeugmaschine, ein Setzgerät, insbesondere zum Setzen von Nägeln, Schrauben und / oder Dübeln in ein Gestein, eine Trennwerkzeugmaschine, beispielsweise eine Steinsägewerkzeugmaschine, eine Steinschleifwerkzeugmaschine, oder um eine Presswerkzeugmaschine handeln.

Insbesondere können Werkzeuge zur Bearbeitung von Gestein, beispielsweise Beton, und zur Bearbeitung von Metallen, beispielsweise von Stahl, umfasst sein.

Die Werkzeuge können insbesondere zur Verwendung mit einem Bauroboter eingerichtet sein. Insbesondere können sie eingerichtet sein, an die Wechselschnittstelle montiert zu werden. Dazu können sie die Gegenfläche aufweisen, die vorzugsweise komplementär zur Koppelfläche ausgebildet ist.

Die Wechselschnittstelle kann eingerichtet sein, zum Betrieb des Werkzeugs erforderliche Betriebsenergie und / oder Daten zu übertragen.

Unter "Betriebsenergie" kann dabei Energie verstanden werden, die zur Ausführung einer Hauptfunktion, beispielsweise zum Bohren in Gestein bei einer Steinbohrwerkzeugmaschine, des Werkzeugs vom Werkzeug benötigt wird. Die Betriebsenergie kann insbesondere mit einer höheren Leistung übertragen werden als die für eine Übertragung von Daten oder Signalen vom Werkzeug zum Bauroboter oder umgekehrt erforderlich ist. Die Leistung, mit der die Betriebsenergie übertragen wird und / oder übertragbar ist, kann beispielsweise mindestens 100 W betragen.

Die zu übertragenden Daten können beispielsweise Eigenschaften und / oder Betriebsparameter des Werkzeugs, beispielsweise eine erforderliche, bereitzustellende Leistung, eine Art des Werkzeugs, einen Zustand des Werkzeugs oder dergleichen, betreffen. Denkbar ist auch, dass die zu übertragenden Daten Eigenschaften und / oder Betriebsparameter des Bauroboters und / oder Eigenschaften einer Bauaufgabe, beispielsweise eine bereitstellbare Leistung, eine Art des Bauroboters, einen Zustand des Bauroboters, ein Maß, beispielsweise eine Tiefe oder ein Durchmesser eines zu bohrenden Bohrlochs oder ein zu erreichender Glättungsgrad einer zu schleifenden Oberfläche, einen Zustand einer ausgeführten Bauaufgabe, beispielsweise eine erreichte Tiefe oder ein Qualitätsmerkmal der ausgeführten Bauaufgabe, betreffen. Die Daten können auch Steuersignale des Bauroboters zur Steuerung des Werkzeugs und / oder Steuersignale des Werkzeugs zur Steuerung des Bauroboters umfassen.

Die Übertragung der Betriebsenergie und / oder Daten kann leitungsgebunden und / oder drahtlos erfolgen. Denkbar ist beispielsweise, dass Daten drahtlos übertragbar sind, sodass z. B. wenigstens eine Eigenschaft eines Werkzeugs durch den Bauroboter abfragbar ist, bevor das Werkzeug an der Wechselschnittstelle montiert ist.

Sie kann mindestens einem Schutzstandard entsprechen, wie er üblicherweise mit IP44, insbesondere mindestens mit IP66, bezeichnet wird.

Die Wechselschnittstelle kann einen Vibrationsdämpfer aufweisen, der eingerichtet ist, Vibrationen des an der Wechselschnittstelle angeordneten Werkzeugs zum übrigen Bauroboter hin, insbesondere um mindestens 3 dB, also mindestens auf die Hälfte, zu reduzieren. Der Vibrationsdämpfer kann eine Schicht eines vibrationsdämpfendes Materials aufweisen. Das vibrationsdämpfende Material kann, zumindest im Wesentlichen, elastisch und / oder plastisch verformbar sein. Alternativ oder ergänzend kann der Vibrationsdämpfer auch auf einem elektrischen und / oder einem magnetischen Feld basieren.

In den Rahmen der Erfindung fällt des Weiteren ein **Bauroboter,** der zur Ausführung von Bauarbeiten im Hochbau, Tiefbau und / oder Stahlbau eingerichtet ist, mit einer mobilen Plattform und einem Manipulator, wobei am Manipulator eine Wechselschnittstelle nach der vorangehend beschriebenen Art angeordnet ist. Ein solcher Bauroboter kann selbst bei erheblicher Schmutz- oder Staubbelastung oder Feuchtigkeit in der Umgebung mit einem an seiner Wechselschnittstelle montierten Werkzeug Bauarbeiten, beispielsweise Bohr-, Schleif-, Säge- oder Pressarbeiten, ausführen.

Der Bauroboter weist einen Manipulator auf. Der Manipulator kann einen mehrachsigen Arm, beispielsweise mit wenigstens drei, vorzugsweise wenigstens sechs Freiheitsgraden, aufweisen. Zur weiteren Vergrößerung der Reichweite, insbesondere entlang einer vertikalen Richtung, kann der Bauroboter eine Hubvorrichtung aufweisen.

An einem Endeffektor des Manipulators kann sich die Wechselschnittstelle befinden.

Der Bauroboter kann zur Ausführung von Bauarbeiten auf einer Hochbau-Baustelle, einer Tiefbau-Baustelle und / oder einer Stahlbau-Baustelle, beispielsweise einer Ölbohrplattform, ausgebildet sein.

Er kann zur Ausführung von Bauarbeiten an einer Decke, einer Wand und / oder einem Boden eingerichtet sein. Er kann zum Markieren, Bohren, Trennen, Meißeln, Schleifen und / oder Setzen eines Bauelements ausgebildet sein.

Der Bauroboter weist eine mobile Plattform auf. Die mobile Plattform kann motorisiert sein. Die mobile Plattform kann ein Räderfahrwerk und / oder ein Kettenfahrwerk umfassen. Die mobile Plattform kann wenigstens zwei Freiheitsgrade aufweisen. Es kann sich auch um eine Flugplattform handeln. Der Bauroboter kann insgesamt wenigstens zehn Freiheitsgrade aufweisen.

Der Bauroboter kann eine Steuerung aufweisen. Die Steuerung kann als Computer ausgebildet sein. Sie kann einen Prozessor, einen Speicherbaustein und / oder einen auf dem Prozessor ausführbaren Programmcode aufweisen. Der Prozessor kann ein oder mehrere Unterprozessoren aufweisen. Der Programmcode kann eingerichtet sein, bei Ausführung auf der Steuerung ein an der Wechselschnittstelle angeordnetes Werkzeug zu betreiben.

Um Staub, Schmutz, Feuchtigkeit oder dergleichen nicht an die Wechselschnittstelle gelangen zu lassen, ist denkbar, dass in einem Freiraum, der zwischen der Koppelfläche, wenigstens einer der Dichtungen und dem Werkzeug ausgebildet ist, ein Überdruck gegenüber dem Umgebungsdruck herrscht.

Bei einer Klasse von Baurobotern ist vorgesehen, dass der Bauroboter eingerichtet ist, selbsttätig ein an der Wechselschnittstelle angeordnetes Werkzeug von dieser zu lösen und / oder ein zweites Werkzeug an der Wechselschnittstelle zu montieren.

Dazu kann der Bauroboter ein Vorratsmagazin mit wenigstens einem Ablageplatz, insbesondere zur Ablage eines Werkzeugs, aufweisen. Im Vorratsmagazin kann wenigstens ein Werkzeug, beispielsweise das zweite Werkzeug, aufgenommen sein. Denkbar ist, dass der Bauroboter das an seiner Wechselschnittstelle angeordnete Werkzeug an eine geeignete Position im Bereich des Vorratsmagazins bringt und dann von der Wechselschnittstelle löst, so dass das Werkzeug an einem Ablageplatz des Vorratsmagazins aufgenommen wird. Dann kann der Bauroboter seine Wechselschnittstelle zum zweiten Werkzeug bewegen, dieses an seiner Wechselschnittstelle montieren und dann dem Vorratsmagazin vollständig entnehmen, um anschließend beispielsweise eine Bauarbeit mit dem zweiten Werkzeug auszuführen.

Denkbar ist auch, dass der Bauroboter eine Absaugvorrichtung zur Absaugung von Staub, Schmutz oder dergleichen aufweist. Die Absaugvorrichtung kann, zumindest teilweise, am Werkzeug ausgebildet sein. Durch die Wechselschnittstelle kann ein Saugschlauch geführt sein. Beispielsweise kann der Saugschlauch durch einen durch den Innenrand begrenzten Innenbereich verlaufen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: eine perspektivische Darstellung eines Bauroboters mit einer Wechselschnittstelle und einem daran angeordneten Werkzeug,
- Fig. 2: eine schematische Draufsicht auf eine Wechselschnittstelle,
- Fig. 3: eine schematische Längsschnittansicht einer weiteren Wechselschnittstelle und
- Fig. 4: ein Verfahren zum Wechseln eines Werkzeugs.

In der nachfolgenden Beschreibung der Figuren werden zur Erleichterung des Verständnisses der Erfindung für gleiche oder sich funktional entsprechende Elemente jeweils die gleichen Bezugszeichen verwendet.

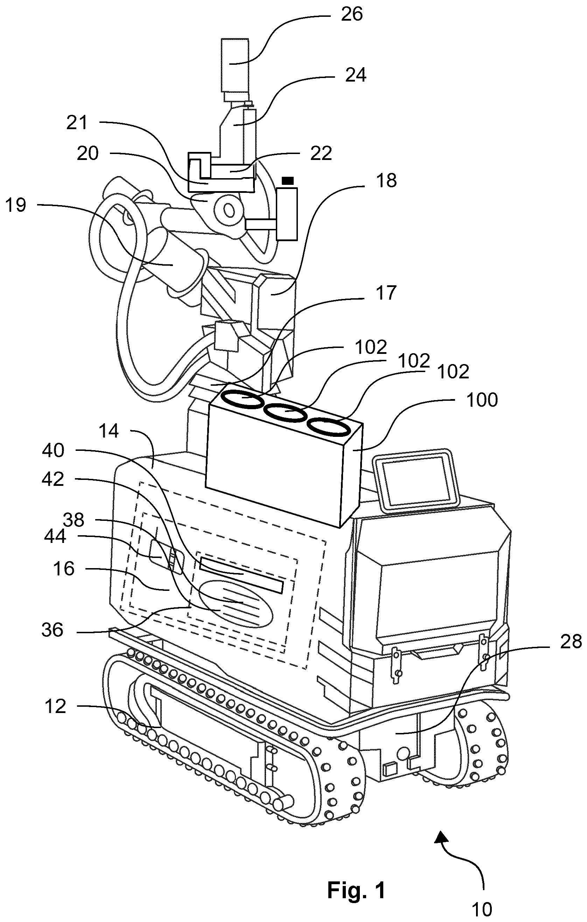

**Fig. 1** zeigt einen Bauroboter **10** mit einem als Kettenfahrwerk ausgebildeten, motorisierten Fahrwerk **12,** einem in einem Gehäuse **14** ausgebildeten Steuerraum **16** und einem oberseitig des Gehäuses 14 angeordneten Manipulator **18.** Der Manipulator 18 umfasst eine Hubvorrichtung **17** zur vertikalen Verlagerung und einen multiaxial steuerbaren Arm **19.**

Am freien Ende des Arms 19 befindet sich ein Endeffektor **20** mit einer Wechselschnittstelle **21.**

An der Wechselschnittstelle 21 ist ein Werkzeug **24,** insbesondere eine Steinbohrwerkzeugmaschine, mit einer Staubabsaugungsvorrichtung **26,** lösbar angeordnet.

Um das Werkzeug 24 an der Wechselschnittstelle 21 lösbar anzuordnen, weist es einen Verbindungsabschnitt **22** auf.

Die Wechselschnittstelle 21 ist zur lösbaren Verbindung des Verbindungsabschnitts 22 und damit auch des Werkzeugs 24 ausgebildet.

Der Bauroboter 10 wird durch einen Speicher **28,** insbesondere in Form eines wiederaufladbaren, Lithium-basierten Akkumulators, mit Betriebsenergie versorgt. Er ist somit kabellos nutzbar.

Ferner weist der Bauroboter 10 ein Vorratsmagazin **100** auf. Das Vorratsmagazin 100 weist mehrere Ablageplätze **102** auf. An freien Ablageplätzen 102 kann das Werkzeug 24 zur Aufbewahrung und gegebenenfalls späteren Wiederverwendung abgelegt werden. Auch können weitere Elemente, beispielsweise weitere Werkzeuge, in den Ablageplätzen 102 zur späteren Verwendung, insbesondere mit dem Bauroboter 10, aufbewahrt werden.

Der Bauroboter 10 weist, vorzugsweise innerhalb des Gehäuses 14, eine im Steuerraum 16 angeordnete Steuerung **36** auf. Die Steuerung 36 umfasst einen Speicherbaustein **38** und einen Mikroprozessor **40.**

Die Steuerung 36 ist mit ausführbarem Programmcode **42** ausgestattet. Der Programmcode 42 ist abrufbar und auf dem Mikroprozessor 40 ausführbar in dem Speicherbaustein 38 gespeichert. Über eine Kommunikationsschnittstelle **44** kann die Steuerung 36 ein Cloudbasiertes Rechnersystem (in Fig. 1 nicht dargestellt) kontaktieren und Daten, beispielsweise Daten zur Art auszuführender Bauaufgaben, zugehörige Positions- und / oder Lagedaten und / oder Steuerbefehle, austauschen.

Der Bauroboter 10 ist zur Ausführung von Bauaufgaben, beispielsweise von Bohrarbeiten in Decken und Wänden, auf einer Baustelle, insbesondere auf einer Hochbau-Baustelle, einer Tiefbau-Baustelle und / oder auf einer Stahlbau-Baustelle, beispielsweise eine Öl- oder eine Gasförderplattform, ausgebildet. Insbesondere kann die Steuerung 36 den Manipulator 18 derart steuern, dass Bauarbeiten an Decken und Wänden ausführbar sind. Ein Beispiel einer solchen Bauaufgabe kann beispielsweise das Bohren eines Bohrlochs, insbesondere mit einer bestimmten Bohrtiefe und / oder einem bestimmten Bohrlochdurchmesser, in eine Betondecke mit dem als Steinbohrwerkzeugmaschine ausgebildeten Werkzeug 24 sein.

Der Bauroboter 10 ist eingerichtet, selbsttätig das an der Wechselschnittstelle 21 angeordnete Werkzeug 24 von dieser zu lösen sowie ein zweites Werkzeug an der Wechselschnittstelle 21 zu montieren. Mithilfe seines Manipulators 18 kann der Bauroboter 10 das Werkzeug 24 zu einem freien Ablageplatz 102 bringen und dann von der Wechselschnittstelle 21 lösen. Das zweite Werkzeug kann von einem der übrigen Ablageplätze 102 aufgenommen und an der Wechselschnittstelle 21 montiert werden.

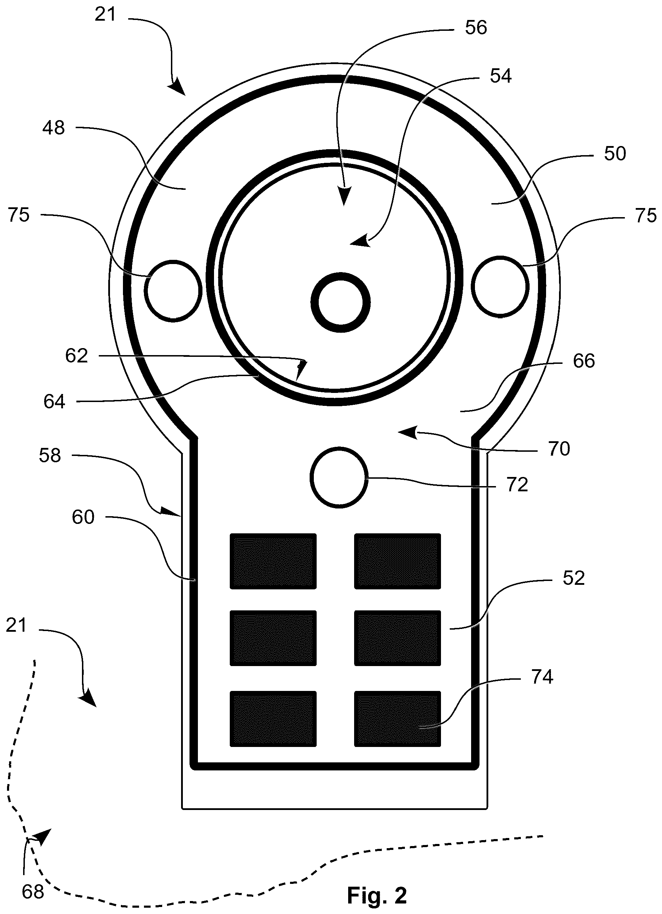

**Fig. 2** zeigt eine schematische Draufsicht auf die Wechselschnittstelle 21 des vorangehend beschriebenen Bauroboters 10 (siehe Fig. 1).

Die Wechselschnittstelle 21 weist eine, insbesondere ebene, Koppelfläche **48** auf.

In diesem Ausführungsbeispiel weist die Koppelfläche 48 einen schlüsselloch-förmigen Querschnitt auf. Insbesondere weist sie einen ringförmigen Abschnitt **50** und einen rechteckigen Abschnitt **52** auf. Der ringförmige Abschnitt 52 weist im Querschnitt eine Freifläche **54** auf, sodass sich entlang einer Längsrichtung der Wechselschnittstelle 21, in Fig. 2 also senkrecht zur Bildebene, eine Durchgangsöffnung **56** ergibt.

Entlang eines Außenrandes **58** verläuft eine Außendichtung **60.** Entlang eines Innenrandes **62** verläuft eine Innendichtung **64.** Somit ist ein Innenbereich **66** durch die Außendichtung 60 einerseits und die Innendichtung 64 andererseits von einer Umgebung **68** der Wechselschnittstelle 21 abgegrenzt.

Denkbar ist, den Verbindungsabschnitt 22 des Werkzeugs 24 (siehe Fig. 1) mit einer zur Koppelfläche 48 komplementär geformten Gegenfläche an der Koppelfläche 48 zu montieren. Dabei kann sich ein Freiraum **70,** begrenzt durch die Koppelfläche 48, die Außendichtung 60 und die Innendichtung 64 sowie die Gegenfläche, ergeben. Der derart gebildete Freiraum 70 grenzt somit an die Koppelfläche 48 an.

Innerhalb des Innenbereichs 66, beispielsweise in einem mittleren Bereich zwischen dem ringförmigen Abschnitt 50 und dem rechteckigen Abschnitt 52, befindet sich eine Druckluft-Düse **72.** Mithilfe der Druckluft-Düse 72 kann Druckluft, insbesondere mit einem den Luftdruck in der Umgebung 68 übersteigenden Druck, in den Freiraum 70 geblasen werden. Somit kann bei montiertem Werkzeug 24 ein Überdruck im Freiraum 70 herrschen. Die Druckluft kann insbesondere gereinigte Luft umfassen.

Im Innenbereich 66 befinden sich ferner elektrische Anschlusspunkte **74,** von denen beispielhaft ein Anschlusspunkt 74 mit einem Bezugszeichen markiert ist. Über die Anschlusspunkte 74 sind Daten bidirektional sowie Betriebsenergie zum montierten Werkzeug 24 übertragbar. Die Anschlusspunkte 74 können beispielsweise elektrisch leitende Metallflächen und / oder elektrisch leitende Federkontakte aufweisen.

Durch die Anordnung der Anschlusspunkte 74 im Innenbereich 66 sind diese ebenfalls durch die Außendichtung 60 und die Innendichtung 64 gegen schädliche Umwelteinflüsse wie beispielsweise Staub, Schmutz oder Feuchtigkeit geschützt.

Auch können weitere Verbindungsleitungen mit Fluidanschlüssen **75** im Innenbereich 66 ausgebildet sein, um Fluide, beispielsweise Druckluft und / oder Hydraulikflüssigkeit, an das Werkzeug 24 weiterzuleiten.

Eine Saugleitung **76** endet in der Durchgangsöffnung 56. Diese kann an eine entsprechende Leitungsfortsetzung am montiertem Werkzeug 24 angeschlossen werden, um eine Verbindung zur Staubabsaugungsvorrichtung 26 (siehe Fig. 1) herzustellen. Über die Saugleitung 76 kann dann von der Staubabsaugungsvorrichtung 26 gesammelter Staub, beispielsweise Bohrmehl, in einem Sammelbehälter oder dergleichen des Bauroboters 10 zentral gesammelt werden.

Denkbar ist, auch andere, beispielsweise anwendungsspezifische, Leitungen, beispielsweise Lichtleiterpakete für Laseranwendungen, Materialzuführungen oder ähnliches durch die Durchgangsöffnung 56 zu führen.

Die Außendichtung 60 und / oder die Innendichtung 64 können derart ausgeführt sein, dass sich diese ab einem bestimmten, kritischen Druck selbsttätig öffnen. Somit können die

Außendichtung 60 und / oder die Innendichtung 64 als Überdruckventile fungieren. Auch kann der Freiraum 70 bei Bedarf freigeblasen werden, insbesondere um diesen von Staub, Schmutz, Feuchtigkeit oder dergleichen zu reinigen. Auch lässt sich somit das Risiko einer Kontaminierung der dann offenliegenden Außendichtung 60 und/oder der Innendichtung 64 sowie gegebenenfalls übriger Bereich der Wechselschnittstelle 21 minimiert wird.

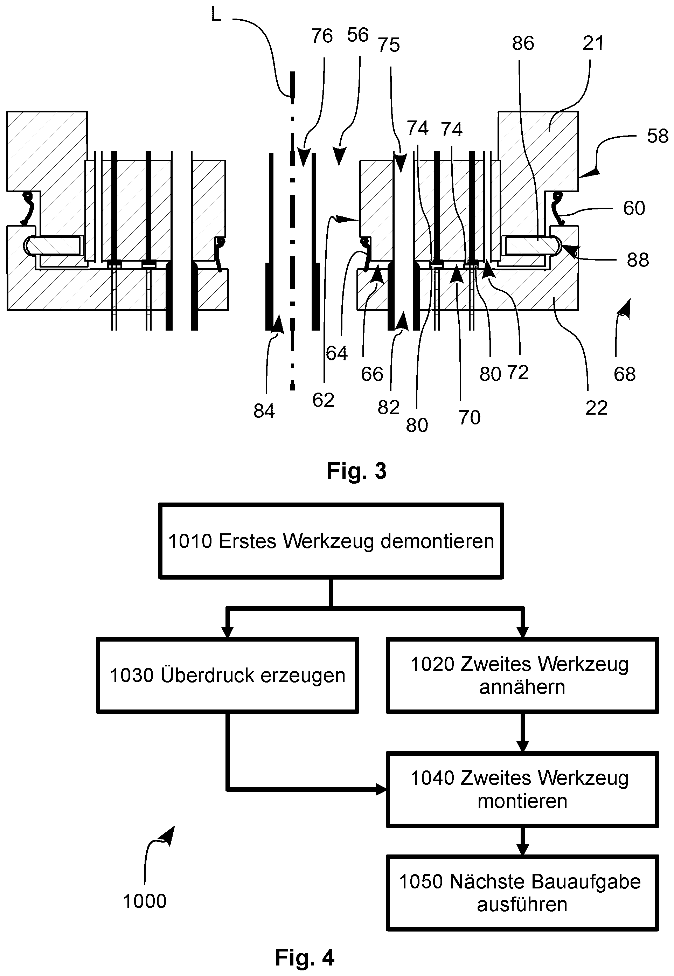

**Fig. 3** zeigt eine schematische Längsschnittansicht einer alternativen Wechselschnittstelle 21, an der ein Werkzeug 24 (siehe Fig. 1) mit seinem Verbindungsabschnitt 22 montiert ist.

Soweit nicht anders angegeben, kann diese Ausführungsform ein oder mehrere der Merkmale der vorangehend beschriebenen Ausführungsformen der Wechselschnittstelle 21 aufweisen.

Die Wechselschnittstelle 21 in dieser Ausführungsform ist ringförmig um eine Längsachse L herum ausgebildet. In ihrem Inneren ist wiederum eine Durchgangsöffnung 56 ausgebildet.

Zu erkennen ist wiederum eine Koppelfläche 48. In diesem Ausführungsbeispiel ist die Koppelfläche 48 nicht eben.

Entlang des Außenrandes 58 verläuft die Außendichtung 60. Entlang des Innenrandes 62 verläuft wiederum die Innendichtung 64. Somit ist ein Innenbereich **66** durch die Außendichtung 60 einerseits und die Innendichtung 64 andererseits von einer Umgebung **68** der Wechselschnittstelle 21 abgegrenzt.

Die Außendichtung 60 und die Innendichtung 64 sind als Axialdichtungen ausgebildet. Sie verlaufen zumindest im Wesentlichen parallel zur Längsachse L.

Der Verbindungsabschnitt 22 weist eine zur Koppelfläche 48 komplementär geformte Gegenfläche **78** auf. Begrenzt durch die Koppelfläche 48, die Außendichtung 60 und die Innendichtung 64 sowie die Gegenfläche 78 ergibt sich somit der Freiraum 70.

In den Freiraum 70 mündet die Druckluft-Düse 72.

Wiederum befinden sich an der Koppelfläche 48 mehrere elektrische Anschlusspunkte 74, die jeweils durch Kontaktpunkte **80** des Verbindungsabschnitts 22 kontaktiert werden.

Zur Weiterleitung von Fluiden sind wiederum mehrere Verbindungsleitungen mit Fluidanschlüssen 75 im Innenbereich 66 ausgebildet. Diese münden in Fortsetzungsleitungen **82** des Verbindungsabschnitts 22.

Eine Saugleitung 76 in der Durchgangsöffnung 56 mündet in einen Sauganschluss **84,** welche wiederum mit der Staubabsaugungsvorrichtung 26 (siehe Fig. 1) verbunden ist.

Fixierstifte **86** sind verschiebbar in der Wechselschnittstelle 21 senkrecht zur Längsachse L gelagert und können, beispielsweise pneumatisch oder elektrisch gesteuert, wie im in Fig. 3 abgebildeten Zustand in Ausnehmungen **88** des Verbindungsabschnitts 22 eingreifen, sodass der Verbindungsabschnitt 22 und damit das Werkzeug 24 an der Wechselschnittstelle 21 lösbar festgelegt ist.

**Fig. 4** zeigt ein Verfahren **1000** zum Wechseln eines ersten Werkzeugs eines Bauroboters. Nach dem Wechsel kann eine nächste Bauaufgabe durch den Bauroboter ausgeführt werden.

Zur Erläuterung des Verfahrens 1000 wird auf die vorangehend eingeführten Bezugszeichen Bezug genommen.

Das Verfahren wird anhand eines Beispiels erläutert, bei dem ein erstes Werkzeug 24 anfangs am Manipulator 18 des Bauroboters 10 montiert ist und gegen ein zweites Werkzeug ausgetauscht werden soll. Das zweite Werkzeug kann dem ersten Werkzeug 24 entsprechen. Es kann insbesondere ebenfalls einen dem Verbindungsabschnitt 22 entsprechenden Verbindungsabschnitt aufweisen. Für das Beispiel wird weiter angenommen, dass das erste Werkzeug 24 an einem der Ablageplätze 102 abgelegt werden soll und das zweite Werkzeug von einem anderen der Ablageplätze 102 aufgenommen werden soll. Das Verfahren kann grundsätzlich auch den Fall umfassen, dass dasselbe Werkzeug 24 zunächst demontiert wird und später wieder montiert wird.

In einer ersten Demontagephase **1010** wird das erste Werkzeug 24 an einem ersten Ablageplatz 102 abgelegt und vom Bauroboter 10 demontiert. Dazu wird mithilfe des Manipulators 18 die Wechselschnittstelle 21 an eine entsprechende Position und Lage im Bereich des betreffenden Ablageplatzes 102 positioniert und das erste Werkzeug 24 an dem Ablageplatz 102 abgelegt. Die Fixierstifte 86 werden aus den Ausnehmungen 88 zurückgezogen, sodass der Verbindungsabschnitt 22 des ersten Werkzeugs 24 und damit das erste Werkzeug 24 insgesamt von der Wechselschnittstelle 21 gelöst werden.

In einer anschließenden Koppelphase **1020** wird das zweite Werkzeug, insbesondere mit seinem Verbindungsabschnitt, der Koppelfläche 48 der Wechselschnittstelle 21 angenähert. Dazu wird mithilfe des Manipulators 18 die Wechselschnittstelle 21 im Bereich des Ablageplatzes 102 positioniert, an dem sich das zweite Werkzeug, insbesondere sein Verbindungsabschnitt, befindet.

Zeitparallel und / oder zeitversetzt zur Annäherung wird in einer Schutzphase **1030** ein Überdruck in einem an die Koppelfläche 48 angrenzenden Raum aufgebaut und dadurch der Bereich um die Wechselschnittstelle 21 zusätzlich geschützt. Dazu wird Druckluft über die Druckluft-Düsen 72 auf Seiten der Koppelfläche 48 eingeströmt.

Sofern der Verbindungsabschnitt des zweiten Werkzeugs noch nicht die Außendichtung 60 und die Innendichtung 64 kontaktiert, kann die Druckluft seitlich entweichen. An der Koppelfläche 48 und / oder der Gegenfläche des Verbindungsabschnitts des zweiten Werkzeugs etwaig anhaftender Staub, Schmutz oder dergleichen kann dadurch mitgerissen werden, sodass die Koppelfläche 48 und die Gegenfläche während des Annäherns durch den Bauroboter 10, insbesondere die Wechselschnittstelle 21, selbsttätig gereinigt wird.

Sobald der Verbindungsabschnitt des zweiten Werkzeugs die Außendichtung 60 und die Innendichtung 64 kontaktiert, d. h. sobald der Freiraum 70 ausgebildet ist, baut sich ein Überdruck im Freiraum 70 auf. In der Umgebung 68 befindlicher Schmutz, Staub, Feuchtigkeit oder dergleichen sind dann somit zusätzlich gehindert, über die Außendichtung 60 oder die Innendichtung 64 hinweg in den Freiraum 70 einzudringen und dadurch gegebenenfalls Störungen im Bereich der Wechselschnittstelle 21 zu verursachen.

Sobald der Verbindungsabschnitt des zweiten Werkzeugs eine geeignete Position und Lage erreicht hat, insbesondere sobald sich der Ausnehmung 88 entsprechende Ausnehmungen des zweiten Werkzeugs den Fixierstiften 86 gegenüber befinden, kann in einer Montagephase **1040** das zweite Werkzeug an der Wechselschnittstelle 21 befestigt und damit abschließend montiert werden. Dazu können die Fixierstifte 86 wieder ausgefahren werden, sodass sie in die jeweiligen Ausnehmungen eingreifen und den Verbindungsabschnitt und damit das zweite Werkzeug insgesamt an der Wechselschnittstelle 21 festlegen.

Die Betätigung der Fixierstifte 86, insbesondere das Einfahren beziehungsweise Ausfahren, kann dabei elektrisch, pneumatisch oder hydraulisch erfolgen.

Dabei ist denkbar, die Erzeugung des Überdrucks zu beenden, insbesondere keine weitere Druckluft einzuströmen, sobald der Druck im Freiraum 70 einen bestimmten Mindestdruck dauerhaft erreicht hat. Dies kann beispielsweise während der Koppelphase 1020 oder während der Montagephase 1040 erreicht sein.

Nachdem das zweite Werkzeug an der Wechselschnittstelle 21 montiert ist, kann der Bauroboter in einer Arbeitsphase **1050** eine nächste Bauarbeit, nun mit dem zweiten Werkzeug, ausführen. Ist beispielsweise das zweite Werkzeug eine Steinschleifwerkzeugmaschine, könnte ein Gestein, beispielsweise eine Betonwand oder eine Betondecke, geschliffen werden.

Aufgrund der Außendichtung 60 und der Innendichtung 64 sowie gegebenenfalls dem im Freiraum 70 herrschenden Überdruck ist dann die Wechselschnittstelle 21 selbst bei einem hohen Schmutz- und / oder Staubaufkommen sowie selbst bei erheblicher Feuchtigkeit geschützt und die Bauarbeit kann sicher ausgeführt werden.

### Bezugszeichenliste

- 10: Bauroboter
- 12: Fahrwerk
- 14: Gehäuse
- 16: Steuerraum
- 17: Hubvorrichtung
- 18: Manipulator
- 19: Arm
- 20: Endeffektor
- 21: Wechselschnittstelle
- 22: Verbindungsabschnitt
- 24: Werkzeug
- 26: Staubabsaugungsvorrichtung
- 28: Speicher
- 36: Steuerung
- 38: Speicherbaustein
- 40: Mikroprozessor
- 42: Programmcode
- 44: Kommunikationsschnittstelle
- 48: Koppelfläche
- 50: ringförmiger Abschnitt
- 52: rechteckiger Abschnitt
- 54: Freifläche
- 56: Durchgangsöffnung
- 58: Außenrand
- 60: Außendichtung
- 62: Innenrand
- 64: Innendichtung
- 66: Innenbereich
- 68: Umgebung
- 70: Freiraum
- 72: Druckluft-Düse
- 74: Anschlusspunkt
- 75: Fluidanschluss
- 76: Saugleitung
- 78: Gegenfläche
- 80: Kontaktpunkt
- 82: Fortsetzungsleitung
- 84: Sauganschluss
- 86: Fixierstift
- 88: Ausnehmung
- 100: Vorratsmagazin
- 102: Ablageplatz
- 1000: Verfahren
- 1010: Demontagephase
- 1020: Koppelphase
- 1030: Schutzphase
- 1040: Montagephase
- 1050: Arbeitsphase
- L: Längsachse

## Patentansprüche

1. **Wechselschnittstelle** (21) zur lösbaren Montage eines Werkzeugs (24), beispielsweise einer Steinbohrwerkzeugmaschine, einer Steinmeißelwerkzeugmaschine, einem Setzgerät, insbesondere zum Setzen von Nägeln, Schrauben und / oder Dübeln in ein Gestein, einer Trennwerkzeugmaschine, beispielsweise einer Steinsägewerkzeugmaschine, einer Steinschleifwerkzeugmaschine, einer Presswerkzeugmaschine, oder einem Greifwerkzeug, an einem Bauroboter (10), der zur Ausführung von Bauarbeiten im Hochbau, Tiefbau und / oder Stahlbau eingerichtet ist,
- wobei die Wechselschnittstelle (21) eine Koppelfläche (48) zur Anordnung und / oder Aufnahme des Werkzeugs (24) aufweist,
- wobei die Wechselschnittstelle (21) mehrere Dichtungen (60, 64) aufweist, **dadurch**
**gekennzeichnet, dass** die Koppelfläche (48) einen Außenrand (58) und einen Innenrand (62) aufweist, so dass zwischen dem Außenrand (58) und dem Innenrand (62) eine Innenfläche eingeschlossen ist, wobei
die Koppelfläche (48) wenigstens eine Außendichtung (60) aufweist zur Abdichtung zum Außenrand (58) hin, und wenigstens eine Innendichtung (64) zur Abdichtung zum Innenrand (62) hin aufweist.

2. Wechselschnittstelle nach Anspruch 1, **dadurch gekennzeichnet, dass** wenigstens die Außendichtung (60) oder die Innendichtung (64) als Axialdichtung ausgebildet ist.

3. Wechselschnittstelle nach einem der vorhergehenden Ansprüche, **dadurch gekennzeichnet, dass** die Wechselschnittstelle (21) einen Fluidanschluss, beispielsweise eine Druckluft-Düse (72), aufweist, der zur Innenfläche führt.

4. **Bauroboter** (10), der zur Ausführung von Bauarbeiten im Hochbau, Tiefbau und / oder Stahlbau eingerichtet ist, mit einer mobilen Plattform und einem Manipulator (18), wobei am Manipulator (18) eine Wechselschnittstelle (21) nach einem der vorhergehenden Ansprüche angeordnet ist.

5. Bauroboter nach dem vorhergehenden Anspruch 4, umfassend ein Werkzeug (24), das an der Wechselschnittstelle (21) montiert ist.

6. Bauroboter nach dem vorhergehenden Anspruch, **dadurch gekennzeichnet, dass** in einem Freiraum (70), der zwischen der Koppelfläche (48), wenigstens einer der Außendichtung (60) oder der Innendichtung (64) und dem Werkzeug (24) ausgebildet ist, ein Überdruck gegenüber dem Umgebungsdruck herrscht.

7. Bauroboter nach einem der Ansprüche 4 bis 6, **dadurch gekennzeichnet, dass** der Bauroboter (10) eingerichtet ist, selbsttätig ein an der Wechselschnittstelle (21) angeordnetes Werkzeug (24) von dieser zu lösen und / oder ein zweites Werkzeug an der Wechselschnittstelle (21) zu montieren.

## Claims

1. Changing interface (21) for releasably assembling a tool (24), for example a stone drilling machine, a stone chiselling machine, a setting device, in particular for setting nails, screws and/or dowels in rock, a cutting tool machine, for example a stone sawing machine, a stone grinding machine, a press tool machine, or a gripping tool, on a construction robot (10) which is specified for carrying out construction work in civil engineering, construction engineering and/or steel construction,
- wherein the changing interface (21) has a coupling face (48) for disposing and/or receiving the tool (24),
- wherein the changing interface (21) has a plurality of seals (60, 64), **characterized in that** the coupling face (48) has an outer periphery (58) and an inner periphery (62), so that an inner surface is enclosed between the outer periphery (58) and the inner periphery (62), wherein
the coupling face (48) has at least one outer seal (60) for sealing in relation to the outer periphery (58), and at least one inner seal (64) for sealing in relation to the inner periphery (62).

2. Changing interface according to Claim 1, **characterized in that** at least the outer seal (60) or the inner seal (64) is formed as an axial seal.

3. Changing interface according to one of the preceding claims, **characterized in that** the changing interface (21) has a fluid port, for example a compressed air nozzle (72), which leads to the inner surface.

4. Construction robot (10), which is specified for carrying out construction work in civil engineering, construction engineering and/or steel construction, having a mobile platform and a manipulator (18), wherein a changing interface (21) according to one of the preceding claims is disposed on the manipulator (18).

5. Construction robot according to preceding Claim 4, comprising a tool (24) which is assembled on the changing interface (21).

6. Construction robot according to the preceding claim, **characterized in that** a positive pressure relative to the ambient pressure prevails in a void (70) formed between the coupling face (48), at least one of the outer seal (60) or inner seal (64), and the tool (24).

7. Construction robot according to one of Claims 4 to 6, **characterized in that** the construction robot (10) is specified to automatically release a tool (24) disposed on the changing interface (21) from the latter and/or to assemble a second tool on the changing interface (21).

## Revendications

1. Interface de changement (21) pour le montage amovible d'un outil (24), par exemple d'une machine-outil de perçage de la pierre, d'une machine-outil de burinage de la pierre, d'un outil de pose, en particulier pour la pose de clous, de vis et/ou de chevilles dans une roche, d'une machine-outil de séparation, par exemple d'une machine-outil de sciage de la pierre, d'une machine-outil de meulage de la pierre, d'une machine-outil de pressage, ou d'un outil de préhension, sur un robot de construction (10), qui est adapté pour exécuter des travaux de construction dans le bâtiment, le génie civil et/ou la construction en acier,
- l'interface de changement (21) présentant une surface de couplage (48) pour agencer et/ou recevoir l'outil (24),
- l'interface de changement (21) présentant plusieurs joints d'étanchéité (60, 64), **caractérisée en ce que** la surface de couplage (48) présente un bord extérieur (58) et un bord intérieur (62), de telle sorte qu'une surface intérieure est enfermée entre le bord extérieur (58) et le bord intérieur (62),
la surface de couplage (48) présentant au moins un joint d'étanchéité extérieur (60) pour assurer l'étanchéité vers le bord extérieur (58), et au moins un joint d'étanchéité intérieur (64) pour assurer l'étanchéité vers le bord intérieur (62).

2. Interface de changement selon la revendication 1, **caractérisée en ce qu'**au moins le joint d'étanchéité extérieur (60) ou le joint d'étanchéité intérieur (64) est réalisé sous forme de joint d'étanchéité axial.

3. Interface de changement selon l'une quelconque des revendications précédentes, **caractérisée en ce que** l'interface de changement (21) présente un raccord de fluide, par exemple une buse d'air comprimé (72), menant à la surface intérieure.

4. Robot de construction (10), qui est adapté pour exécuter des travaux de construction dans le bâtiment, le génie civil et/ou la construction en acier, avec une plate-forme mobile et un manipulateur (18), une interface de changement (21) selon l'une quelconque des revendications précédentes étant agencée sur le manipulateur (18).

5. Robot de construction selon la revendication 4 précédente, comprenant un outil (24) monté sur l'interface de changement (21).

6. Robot de construction selon la revendication précédente, **caractérisé en ce qu'**une surpression par rapport à la pression ambiante règne dans un espace libre (70) réalisé entre la surface de couplage (48), au moins un parmi le joint d'étanchéité extérieur (60) ou le joint d'étanchéité intérieur (64) et l'outil (24).

7. Robot de construction selon l'une quelconque des revendications 4 à 6, **caractérisé en ce que** le robot de construction (10) est adapté pour détacher automatiquement de l'interface de changement (21) un outil (24) agencé sur celle-ci et/ou pour monter un deuxième outil sur l'interface de changement (21).
